(19) Europäisches Patentamt
European Patent Office
Office européen des brevets

(11) **EP 4 738 456 A1**

(12) **EUROPEAN PATENT APPLICATION**
published in accordance with Art. 153(4) EPC

(43) Date of publication:
06.05.2026 Bulletin 2026/19

(21) Application number: 24831008.8

(22) Date of filing: 28.06.2024

(51) International Patent Classification (IPC):
*H01M 4/36* (2006.01)     *H01M 4/133* (2010.01)
*H01M 4/1393* (2010.01)     *H01M 10/0525* (2010.01)

(52) Cooperative Patent Classification (CPC):
Y02E 60/10

(86) International application number:
PCT/CN2024/102478

(87) International publication number:
WO 2025/002381 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310797433

(71) Applicants:
• AESC Hebei Co., Ltd.
Cangzhou, Hebei 061758 (CN)
• AESC HUBEI CO., LTD.
Shiyan, Hubei 442002 (CN)
• AESC Jiangsu Co., Ltd.
Wuxi, Jiangsu 214443 (CN)

• AESC ORDOS CO., LTD.
Inner Mongolia 017200 (CN)
• AESC Shanghai Co., Ltd.
Shanghai 201315 (CN)

(72) Inventors:
• WANG, Yanqing
Shanghai 201315 (CN)
• SUN, Huayu
Shanghai 201315 (CN)
• LIU, Yongxing
Shanghai 201315 (CN)

(74) Representative: Becker, Eberhard
Becker Kurig & Partner
Patentanwälte mbB
Bavariastraße 7
80336 München (DE)

(54) **NEGATIVE ELECTRODE SHEET, ELECTROCHEMICAL DEVICE, AND PREPARATION METHOD FOR NEGATIVE ELECTRODE SHEET**

(57)     A negative electrode sheet, an electrochemical device, and a preparation method for the negative electrode sheet, relating to the technical field of secondary batteries. The negative electrode sheet comprises a current collector and a negative electrode active material layer. The negative electrode active material layer is located on at least one side of the current collector, and the negative electrode active material layer comprises a first active material layer and a second active material layer; the first active material layer and the second active material layer are stacked in the direction close to the current collector; and the structural stability parameter ratio S1/S2 of the first active material layer to the second active material layer satisfies 0.01-10.0. According to the negative electrode sheet, the electrochemical device, and the preparation method for the negative electrode sheet, by adjusting structural stability parameters of a double-layer structure in the negative electrode active material layer, the negative electrode active material layer forms a structure having a gradually decreasing hardness in the direction close to the current collector, so as to effectively optimize the pore distribution and the structural stability of the negative electrode active material layer, thereby improving the fast charging, cycle and storage performance of a lithium ion battery.

FIG. 1

EP 4 738 456 A1

## Description

### TECHNICAL FILED

The invention relates to the technical field of secondary batteries, and specifically relates to a negative electrode sheet, an electrochemical device, and a preparation method of the negative electrode sheet.

### RELATED ART

In the conventional lithium ion battery system, the charging capability, cycle performance, processing performance, and safety performance of lithium ion batteries are determined by the negative electrode to a considerable extent. At present, the optimization strategies for negative electrode sheets focus on aspects such as compaction density, areal density, and active material ratio most of the time. However, as cell performance gradually approaches bottlenecks, we need to specifically refine the influence of electrode sheet levels on the cell performance, so as to more effectively improve the performance of corresponding cells from an intrinsic level.

Currently, simply adjusting the compaction density, areal density, and active material ratio of the negative electrode materials no longer provides significant space for optimizing cell fast charging and cycle performance. It is necessary to reasonably consider the physical and chemical characteristics of the negative electrode sheets and optimize the distribution and orientation of particles and pores in the negative electrode active material layer by comprehensively adjusting the material ratio, hardness distribution, and compaction density of the negative electrode active material layer. The kinetic balance of the negative electrode sheets may be improved in this way, and the fast charging and cycle performance of the lithium ion batteries may thus be further optimized.

Therefore, it is necessary to design a negative electrode sheet, an electrochemical device, and a preparation method of the negative electrode sheet to solve the above problems.

### SUMMARY

In view of the above disadvantages of the related art, the invention provides a negative electrode sheet, an electrochemical device, and a preparation method of the negative electrode sheet, which comprehensively adjusts a material ratio, hardness distribution, and compaction density of the negative electrode active material layer in the negative electrode sheet, so that the technical problems of difficulty in comprehensively optimizing the distribution and orientation of particles and pores in the negative electrode active material layer and effectively balancing the kinetic performance of the negative electrode sheet found in the related art can be improved.

To achieve the above objectives and other related objectives, the invention provides a negative electrode sheet including a current collector and a negative electrode active material layer.

Herein, the negative electrode active material layer is located on at least one side of the current collector, and the negative electrode active material layer includes a first active material layer and a second active material layer. The first active material layer and the second active material layer are stacked in a direction close to the current collector, and a structural stability parameter ratio $S_1/S_2$ of the first active material layer to the second active material layer satisfies 0.01-10.0.

In an embodiment of the invention, a negative electrode material in the negative electrode active material layer includes a graphite material.

In an embodiment of the invention, the structural stability parameter ratio $S_1/S_2$ of the first active material layer to the second active material layer satisfies 0.1-5.0.

In an embodiment of the invention, a structural stability parameter $S_1$ of the first active material layer is 3-16.

In an embodiment of the invention, the negative electrode active material layer satisfies

$$6.5 \leq \frac{(\tau - \varepsilon)V_{OI}}{P} \leq 80$$

, wherein $\tau$ is a tortuosity of the negative electrode active material layer, $\varepsilon$ is a porosity of the negative electrode active material layer, P is a compaction density of the negative electrode active material layer, $V_{OI}$ is a stacking orientation degree of negative electrode material particles in the negative electrode active material layer.

In an embodiment of the invention, the negative electrode active material layer satisfies

$$20 \leq \frac{(\tau - \varepsilon)V_{OI}}{P} \leq 60$$

.

In an embodiment of the invention, a compaction density of the negative electrode active material layer is 1.65-1.75 g/cm$^3$.

Another aspect of the invention provides a preparation method for the negative electrode sheet, and the preparation method includes the following steps. A first negative electrode material is mixed with a binder, a conductive agent, and a thickening agent to form a slurry, and a first active material layer slurry is obtained. A second negative electrode material is mixed with a binder, a conductive agent, and a thickening agent to form a slurry, and a second active material layer slurry is obtained. The second active material layer slurry and the first active material layer slurry are coated on at least one side of the current collector in sequence, and after coating, the negative electrode sheet is obtained through drying, compaction, die cutting, and punching. A hardness of the first negative electrode material is greater than a hardness of the second negative electrode material.

In an embodiment of the invention, the structural stability parameter ratio $S_1/S_2$ of the first negative electrode material to the second negative electrode material satisfies 0.01-10.0.

In an embodiment of the invention, an average particle size Dv50 of the first negative electrode material is 11-17$\mu$m, and an average particle size Dv50 of the second negative electrode material is 16-19$\mu$m.

The invention further provides an electrochemical device including a positive electrode sheet, a separator, an electrolyte, and the negative electrode sheet according to any one of the above.

In the negative electrode sheet, the electrochemical device, and the preparation method for the negative electrode sheet provided by the invention, by adjusting the structural stability parameters of the double-layer structure in the negative electrode active material layer, the negative electrode active material layer forms a structure having a gradually decreasing hardness in the direction close to the current collector, so as to effectively optimize the pore distribution and the structural stability of the negative electrode active material layer. A negative electrode sheet with low tortuosity, high orientation, and abundant pores is also formed during compaction, so fast charging and cycle and storage performance of the lithium ion battery are further improved. Therefore, some practical problems in the related art are effectively overcome, so that the invention exhibits high utilization value and use significance.

## DESCRIPTION OF THE DRAWINGS

To make the technical solutions provided in the embodiments of the invention or the related art more clearly illustrated, several accompanying drawings required by the embodiments or the related art for description are briefly introduced as follows. Obviously, the drawings in the following description are merely some embodiments of the invention, and for a person having ordinary skill in the art, other drawings can be obtained based on these drawings without an inventive effort.

FIG. 1 is a schematic view of a structure of a negative electrode sheet in an embodiment of the invention.
FIG. 2 is a schematic flow chart of a preparation method of the negative electrode sheet in an embodiment of the invention.

Description of reference numerals of the elements:
100: current collector, 200: negative electrode active material layer, 210: first active material layer, and 220: second active material layer.

## SPECIFIC EMBODIMENTS

The implementation of the invention is illustrated below by specific embodiments. A person having ordinary skill in the art can easily understand other advantages and effects of the invention from the content disclosed in this specification. The invention can also be implemented or applied through other different specific implementation ways. The details in this specification can also be modified or changed based on different viewpoints and applications without departing from the spirit of the invention. Note that the following embodiments and the features in the embodiments may be combined with each other in the case of no conflict. It should also be understood that the terminology used in the embodiments of the invention is for describing a specific implementation, but not for limiting the protection scope of the invention. The test methods for which specific conditions are not indicated in the following embodiments are usually in accordance with conventional conditions or in accordance with the conditions suggested by each manufacturer.

It should be noted that terms such as "upper", "lower", "left", "right", "middle" and "one" quoted in this specification are only for the convenience of description and are not used to limit the applicable scope of the invention. The change or adjustment of its relative relationship should also be regarded as the applicable scope of the invention without substantive change of the technical content.

In this specification, a structural stability parameter S of a negative electrode material is a structural stability index of secondary particles of the material (single particle is defined as 100.0). For specific definition, please refer to the test method of the structural stability parameter described in the following paragraphs.

A tortuosity $\tau$ of a negative electrode sheet is defined as: in a negative electrode active material layer of the negative electrode sheet, a ratio of an actual length of pores to a shortest distance of the negative electrode active material layer in a direction perpendicular to the current collector.

A porosity $\varepsilon$ of the negative electrode sheet is defined as: in the negative electrode sheet, a ratio of a pore volume in the porous negative electrode material to an apparent volume (or referred to as a total volume) of the porous negative electrode material, generally expressed as a percentage.

An orientation degree $V_{OI}$ of the negative electrode sheet represents a stacking orientation degree of negative electrode material particles in the negative electrode sheet, defined as an intensity ratio of I004/I110 peaks in XRD diffraction of the negative electrode material in the negative electrode sheet.

An average particle size Dv50 of the material may be defined as a particle size corresponding to 50% of volume accumulation in a particle size distribution curve of the particles. The average particle size Dv50 may be measured by, for example, a laser diffraction method. The laser diffraction method can usually measure particle sizes from a submicron range to several millimeters, so that results with high reproducibility and high resolution are obtained.

The invention provides a negative electrode sheet used for participating in manufacturing an electrochemical device. The electrochemical device includes a positive electrode sheet, a negative electrode sheet, an electrolyte, a separator, and corresponding connecting auxiliary components and circuits most of the time. Positive and negative electrode materials in the positive and negative electrode sheets may intercalate and deintercalate lithium ions to achieve energy storage and release. The electrolyte is a carrier for lithium ion transport between positive and negative electrodes. The separator may allow lithium ions to pass through but is not conductive, so that the positive and negative electrodes are separated to prevent short circuit. The positive and negative electrode sheets play a decisive role most of the time in key performance factors such as the energy storage function, the energy density of its cell, cycle performance, and safety of a lithium ion battery.

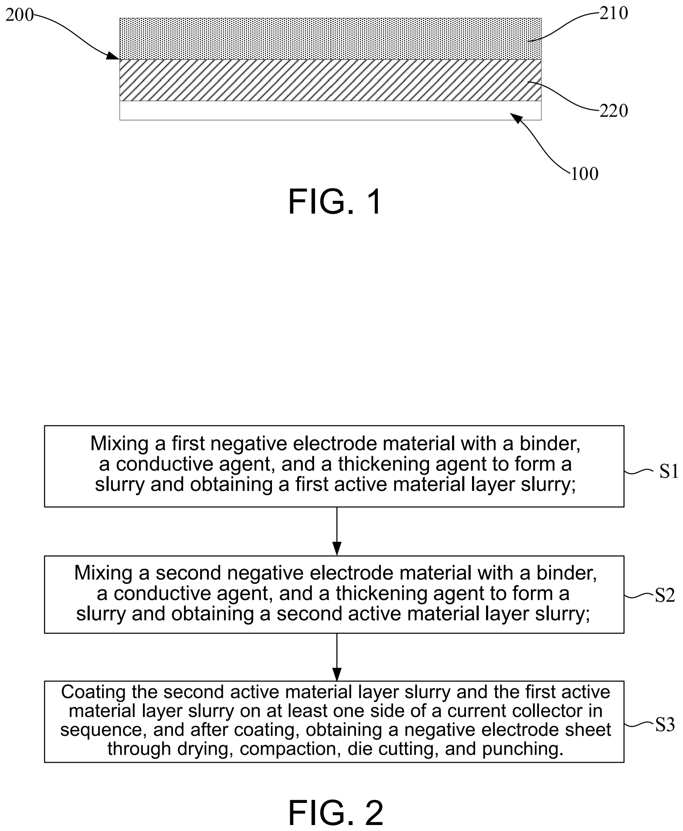

As shown in FIG. 1, a negative electrode sheet provided by the invention includes a current collector 100 and a negative electrode active material layer 200 located on at least one side of the current collector 100. Specifically, the current collector 100 has two surfaces opposite to each other in its own thickness direction, and the negative electrode active material layer 200 is disposed on any one or both of the two surfaces of the current collector 100. Herein, the current collector 100 may adopt a material with good conductivity and mechanical strength, so as to serve the function of conduction and current collection. In some embodiments, the current collector 100 may adopt copper foil.

As shown in FIG. 1, the negative electrode active material layer 200 includes a first active material layer 210 and a second active material layer 220. In the negative electrode active material layer 200, the first active material layer 210 and the second active material layer 220 are stacked in a direction close to the current collector 100. The second active material layer 220 is disposed on a surface of the current collector 100, and the first active material layer 210 is disposed on the second active material layer 220.

Herein, since in the negative electrode active material layer 200, the first active material layer 210 and the second active material layer 220 are stacked in the direction close to the current collector 100, by adjusting a ratio of structural stability parameters S of the first active material layer 210 to the second active material layer 220, a material hardness of the negative electrode active material layer 200 after compaction may exhibit a gradient decrease in the direction close to the current collector 100. A material structure of the negative electrode active material layer 200 with material hardness being tight at the top and loose at the bottom in the direction close to the current collector 100 is more conducive to forming a reasonable particle and pore distribution during the compaction process, so that the structural stability and pore abundance of the negative electrode sheet are improved.

In some embodiments, in the negative electrode active material layer, a structural stability parameter ratio $S_1/S_2$ of the materials of the first active material layer to the second active material layer satisfies 0.01-10.0, so that a negative electrode active material layer with appropriate overall hardness and abundant porosity is formed on the negative electrode sheet.

Herein, when the structural stability parameter ratio $S_1/S_2$ of the materials of the first active material layer and the second active material layer satisfies 0.01-10.0, the negative electrode sheet has reasonable pore distribution and high structural stability. The porosity $\varepsilon$ of the negative electrode sheet is 15% - 30%, and the tortuosity $\tau$ of the negative electrode sheet is 3-6. When the ratio of $S_1/S_2$ is excessively high, it is beneficial to improve the pore abundance and hardness of the negative electrode sheet, but may cause the structural stability and compaction density of the negative electrode sheet to decrease significantly. When the ratio of $S_1/S_2$ is excessively low, it may cause the pore abundance of the negative electrode sheet to decrease, resulting in the porosity $\varepsilon$ of the negative electrode sheet decreasing to below 15% and the pore tortuosity $\tau$ increasing to above 6. The kinetic performance of the negative electrode sheet thus deteriorates, and the charging-discharging performance of the secondary battery may decline significantly.

In some embodiments, in the negative electrode active material layer, the structural stability parameter ratio $S_1/S_2$ of the materials of the first active material layer to the second active material layer satisfies: $0.01 \leq S_1/S_2 \leq 3$, $0.1 \leq S_1/S_2 \leq 3$, $0.1 \leq S_1/S_2 \leq 5$, $1 \leq S_1/S_2 \leq 7$, $3 \leq S_1/S_2 \leq 7$, $3 \leq S_1/S_2 \leq 8$, $3 \leq S_1/S_2 \leq 10$, $5 \leq S_1/S_2 \leq 7$, or $5 \leq S_1/S_2 \leq 10$, etc.

In some preferred embodiments, in the negative electrode active material layer, the structural stability parameter ratio $S_1/S_2$ of the materials of the first active material layer to the second active material layer satisfies 0.01-5.0. In the negative electrode active material layer of the negative electrode sheet, when the structural stability parameter ratio $S_1/S_2$ of the materials of the first active material layer to the second active material layer is within an appropriate range, it is more beneficial to balance the improvement of the porosity, compaction density, and structural stability of the negative electrode sheet, and the pore tortuosity of the negative electrode sheet is also decreased.

In some embodiments, on the basis that the negative electrode sheet satisfies the above conditions, a structural stability parameter $S_1$ of the first active material layer material is 3.0-16.0, for example, 3.0, 3.7, 5.0, 7.4, 8.0, 8.3, 10.0, 10.4, 13.4, 15.1, 15.6, or 16.0. A structural stability parameter $S_2$ of the second active material layer material may be any value that satisfies the structural stability parameter ratio range ($0.01 \leq S_1/S_2 \leq 10.0$), for example, the structural stability parameter $S_2$ of the second active material layer material may be any value within 1.0-100.0 that satisfies the stability parameter ratio range.

In some embodiments, by adjusting the overall compaction density and interlayer structural parameters of the negative electrode sheet, the negative electrode active material layer satisfies: $6.5 \leq \dfrac{(\tau - \varepsilon)V_{OI}}{P} \leq 80$. Within this range, the negative electrode sheet forms a negative electrode active material layer that has low tortuosity, high orientation, and high porosity, so that the fast charging capability of the double-layer negative electrode active material layer in the negative electrode sheet is improved, where $\tau$ is the tortuosity of the negative electrode active material layer, $\varepsilon$ is the porosity of the negative electrode active material layer, $P$ is the compaction density of the negative electrode active material layer, and $V_{OI}$ is the stacking orientation degree of the negative electrode material particles in the negative electrode active material layer.

In some embodiments, the negative electrode active material layer satisfies: $10 \leq \dfrac{(\tau - \varepsilon)V_{OI}}{P} \leq 30$, $20 \leq \dfrac{(\tau - \varepsilon)V_{OI}}{P} \leq 40$, $20 \leq \dfrac{(\tau - \varepsilon)V_{OI}}{P} \leq 60$, $30 \leq \dfrac{(\tau - \varepsilon)V_{OI}}{P} \leq 60$, $40 \leq \dfrac{(\tau - \varepsilon)V_{OI}}{P} \leq 70$, or $40 \leq \dfrac{(\tau - \varepsilon)V_{OI}}{P} \leq 80$.

In some preferred embodiments, the negative electrode active material layer of the negative electrode sheet satisfies $20 \leq \dfrac{(\tau - \varepsilon)V_{OI}}{P} \leq 60$. Herein, when $\dfrac{(\tau - \varepsilon)V_{OI}}{P}$ parameter of the negative electrode active material layer of the negative electrode sheet parameter is within the above range, it is more favorable for balancing the improvement of fast charging and cycle performance of the secondary battery.

Through in-depth research by the inventors, it has been found that when the negative electrode sheet of the present application satisfies the above conditions and if it also optionally satisfies one or several of the following design conditions, the performance of the secondary battery may be further improved.

In some preferred embodiments, the compaction density $P$ of the negative electrode sheet is 1.65-1.75 g/cm³, for example, 1.65 g/cm³, 1.67 g/cm³, 1.70 g/cm³, 1.73 g/cm³, or 1.75 g/cm³.

In some preferred embodiments, the porosity $\varepsilon$ of the negative electrode sheet is 15%-30%, for example, 15%, 17%, 20%, 22%, 25%, 27%, 29%, or 30%.

In some preferred embodiments, the tortuosity $\tau$ of the negative electrode sheet is 3-5, for example, 3.0, 3.3, 3.37, 3.5, 3.6, 3.64, 3.8, 4.0, 4.2, 4.5, 4.7, or 5.0.

In some preferred embodiments, the orientation degree $V_{OI}$ of the negative electrode sheet is 14-24, for example, 14, 16, 18, 21, 22, 23, or 24.

In some embodiments, the negative electrode material in the negative electrode active material layer includes an inner core and a coating layer. The inner core includes a graphite material, and the coating layer is coated on a surface of the inner core and includes amorphous carbon.

In the above embodiments, the graphite material includes natural graphite, artificial graphite, and graphitized carbon. Preferably, the graphite material may be artificial graphite.

In the above embodiments, the amorphous carbon coating layer may be formed by carbonization of an organic carbon source. For instance, the organic carbon source may be selected from polymer materials, such as coal pitch, petroleum pitch, phenolic resin, and other polymer materials.

The structure of amorphous carbon is disordered and has a relatively high interlayer spacing. Therefore, the use of amorphous carbon to coat the inner core material may enable active ions to diffuse more rapidly in the negative electrode material particles, so that the fast charging capability of the negative electrode material may be improved. Meanwhile, the amorphous carbon coating layer may also provide protection for the inner core, so graphite layer exfoliation caused by solvent co-intercalation of the inner core material may be greatly reduced, enabling the negative electrode material to exhibit high structural stability. Therefore, the negative electrode material may have high capacity utilization and cycle life.

In addition, it should be noted that the negative electrode active material layer further includes a binder and a conductive agent. Herein, the binder is selected from at least one of polyimide, styrene-butadiene rubber, polyacrylic acid, polyvinylidene fluoride, sodium carboxymethyl cellulose, and lithium carboxymethyl cellulose. The conductive agent is selected from at least one of carbon black, SP, single-walled carbon nanotubes, multi-walled carbon nanotubes, and graphene.

With reference to FIG. 2, the invention provides a preparation method for a negative electrode sheet, and the method includes the following steps.

In S1, a first negative electrode material is mixed with a binder, a conductive agent, and a thickening agent to form a slurry, and a first active material layer slurry is obtained.

In S2, a second negative electrode material is mixed with a binder, a conductive agent, and a thickening agent to form a slurry, and a second active material layer slurry is obtained.

In S3, the second active material layer slurry and the first active material layer slurry are coated on at least one side of the current collector in sequence, so as to form a negative electrode active material layer on the current collector (in the negative electrode active material layer, the second active material layer is coated on the current collector, and the first active material layer is coated on the second active material layer), and after coating, the negative electrode sheet is obtained through drying, compaction, die cutting, and punching.

In the preparation method for the negative electrode sheet, the first negative electrode material and the second negative electrode material with suitable physical parameters are selected to prepare the first active material layer slurry and the second active material layer slurry, and the design of the interlayer structure of the negative electrode active material layer is achieved by sequentially coating the second active material layer slurry and the first active material layer slurry on the current collector. After drying and compaction, the negative electrode active material layer with this interlayer structure enables material particles of different particle sizes to be reasonably spaced and arranged internally, so that abundant pore structures with high orientation are formed between the particles. The structural stability and pore distribution rationality of the negative electrode active material layer based on the kinetic foundation of the selected negative electrode material are therefore further enhanced.

In steps S1 and S2, the first negative electrode material and the second negative electrode material used are both negative electrode materials with a core of graphite material and a coating layer of amorphous carbon. Herein, the graphite material is selected from one or more of natural graphite, artificial graphite, and graphitized carbon, and the amorphous carbon may be formed by carbonization of an organic carbon source on the graphite material, for example, the organic carbon source may be selected from polymer materials such as coal pitch, petroleum pitch, phenolic resin, and other polymer materials.

In steps S1 and S2, the binder is selected from at least one of polyimide, styrene-butadiene rubber, polyacrylic acid, polyvinylidene fluoride, sodium carboxymethyl cellulose, and lithium carboxymethyl cellulose, where styrene-butadiene rubber is preferred. The conductive agent is selected from at least one of carbon black, SP, single-walled carbon nanotubes, multi-walled carbon nanotubes, and graphene, where carbon black is preferred. The thickening agent is sodium carboxymethyl cellulose (CMC).

In some embodiments, in step S1 and step S2, the structural stability parameter ratio $S_1/S_2$ of the selected first negative electrode material to the second negative electrode material satisfies 0.01-10.0. Under this structural parameter, the hardness of the first negative electrode material is higher than that of the second negative electrode material. The second negative electrode material and the first negative electrode material with this structural stability parameter ratio range form a double-layer structure of the negative electrode active material layer on the current collector in the direction away from the current collector, and may enable the internal hardness of the negative electrode active material layer to show a gradient decreasing trend in the direction toward the current collector after densification processing. The structural stability and pore distribution rationality of the negative electrode sheet are thus improved.

Further, in some preferred embodiments, the structural stability parameter ratio $S_1/S_2$ of the selected first negative electrode material to the second negative electrode material satisfies 0.1-5.0.

In some embodiments, in step S1 and step S2, a first negative electrode material with an average particle size Dv50 of 11-17$\mu$m is selected to prepare the first active material layer slurry, for example, a first negative electrode material with an average particle size Dv50 of 11$\mu$m, 11.2$\mu$m, 12.2$\mu$m, 13$\mu$m, 13.3$\mu$m, 13.7$\mu$m, 14$\mu$m, 14.5$\mu$m, 15$\mu$m, 15.6$\mu$m, 16$\mu$m, 16.2$\mu$m, or 17$\mu$m is selected. A second negative electrode material with an average particle size Dv50 of 16-19$\mu$m is selected to prepare the second active material layer slurry, for example, a second negative electrode material with an average particle size Dv50 of 16$\mu$m, 16.7$\mu$m, 17$\mu$m, 17.5$\mu$m, 18$\mu$m, 18.3$\mu$m, 18.7$\mu$m or 19$\mu$m is selected. In addition, the average particle size Dv50 of the selected second negative electrode material is greater than the average particle size Dv50 of the first negative electrode material.

In this embodiment, in step S3, by coating the second active material layer slurry and the first active material layer slurry onto the current collector to form a negative electrode active material layer of a double-layer structure, the negative electrode active material layer has a double-layer structure with close average particle sizes Dv50. Further, in the double-layer structure, the outer first active material layer has a lower average particle size Dv50, while the inner second active material layer has a higher average particle size Dv50.

Since the interlayer structure of the negative electrode active material layer overall presents a lower average particle size Dv50 in the outer layer and a higher average particle size Dv50 in the inner layer, the gaps between material particles in the inner layer of the negative electrode active material layer are larger, while the gaps between material particles in the outer layer are smaller. Therefore, during the compaction process of the negative electrode sheet, the material particles of the first active material are compacted and embedded between the material particles of the second active material layer, so that the particles in the negative electrode active material layer are enabled to form an interval arrangement with high space utilization efficiency. The large number of particles arranged at intervals may easily balance the improvement of both the orientation and porosity of the negative electrode active material layer. Further, since the average particle sizes Dv50 of the particles in the double-layer structure of the negative electrode active material layer are relatively close, the pore structure formed between the particles after compaction has high orientation and low tortuosity.

Therefore, in step S3, based on coating the interlayer structure of the negative electrode active material layer on the current collector, the compaction density of the negative electrode active material layer is adjusted through densification, so that the $\dfrac{(\tau - \varepsilon) V_{OI}}{P}$ of the negative electrode sheet is 6.5-80, to form a negative electrode sheet that balances low tortuosity, high orientation, and rich pores. The fast charging and cycle performance of the negative electrode sheet are thus effectively improved.

In step S3, a dual-cavity coating die head is used. The first active material layer slurry is fed into the upper cavity of the dual-cavity coating die head, the second active material layer slurry is fed into the lower cavity of the dual-cavity coating die head, and then the first active material layer slurry and second active material layer slurry in the upper cavity and the lower cavity of the dual-cavity coating die head are uniformly coated on both side surfaces of the current collector according to parameters of a weight ratio 1:1 and a coating weight 105g/m². A negative electrode active material layer with a double-layer structure of the second active material layer and first active material layer stacked in the direction away from the current collector is thus formed on the current collector surface. After coating, the negative electrode active material layer on the current collector is dried, compacted, die-cut, and punched, and the negative electrode sheet is obtained.

The invention also provides an electrochemical device including the negative electrode sheet according to any one of the above embodiments of the invention or the negative electrode sheet prepared by the preparation method according to any one of the above embodiments. The electrochemical device is a secondary lithium ion battery, for example, and the battery includes a positive electrode sheet, a negative electrode sheet, a separator disposed between the positive electrode sheet and the negative electrode sheet, and an electrolyte. Herein, positive and negative electrode materials on the positive and negative electrode sheets may intercalate and deintercalate lithium ions to achieve energy storage and release. The electrolyte is a carrier for lithium ion transport between the positive and negative electrodes. The separator may allow lithium ions to pass through but is not conductive, so that the positive and negative electrodes are separated to prevent short circuit.

The positive electrode sheet, the separator, and the electrolyte may adopt conventional materials and preparation methods in the art, and the following examples are provided.

The preparation process of the secondary lithium ion battery is as follows:
Preparation of positive electrode sheet: a ternary positive electrode material ($LiNi_{0.8}Co_{0.1}Mn_{0.1}O_2$), conductive carbon black (Super P), and binder polyvinylidene fluoride (PVDF) were mixed according to a mass ratio of 97:1.5:1.5, solvent N-methylpyrrolidone (NMP) was added, and the mixture was thoroughly stirred and mixed to obtain a positive electrode slurry. The positive electrode slurry was coated on a positive electrode current collector aluminum foil, and after drying, cold pressing, slitting and other processes, a positive electrode sheet was prepared. Herein, the conductive agent may also be selected from at least one of conductive materials such as acetylene black, carbon nanotubes, graphene, VGCF, and the binder may also be selected from at least one of PVDF, PTFE, etc.

The preparation process of the negative electrode sheet is described above.

Preparation of separator: a porous PE film with a thickness of 11μm was selected as the separator. Herein, the thickness of the separator was 9μm to 18μm, the air permeability was 180s/100mL to 380s/100mL, and the porosity was 30% to 50%.

Preparation of electrolyte: ethylene carbonate (EC), ethyl methyl carbonate (EMC), and diethyl carbonate (DEC) were uniformly mixed according to a volume ratio of 1:1:1 to obtain an organic solvent, and then fully dried lithium salt $LiPF_6$ was dissolved in the mixed organic solvent to prepare an electrolyte with a concentration of 1mol/L.

Battery assembly: the prepared positive electrode sheet, the separator, and the negative electrode sheet were sequentially stacked, with the separator positioned between the positive and negative electrode sheets to provide isolation. An aluminum plastic film was then wrapped outside, and after drying, the above-prepared electrolyte was injected. Through encapsulation, standing, formation, and other processes, a soft-pack battery (i.e., lithium ion battery) with a capacity of 1 Ah was finally prepared.

The technical solutions of the invention are going to be described in detail below through several specific examples and comparative examples. Unless otherwise stated, the raw materials and reagents used in the following examples are commercially available or can be prepared by conventional methods in the art.

Example 1

This example provides a negative electrode sheet, where the structural stability parameter ratio $S_1/S_2$ of the materials of the first active material layer to the second active material layer in the negative electrode active material layer of the negative electrode sheet is 1.6, and $\dfrac{(\tau - \varepsilon)V_{OI}}{P}$ of the negative electrode active material layer is 37.0.

The preparation method of the negative electrode sheet includes the following:

In S1, the first negative electrode material was mixed with binder styrene-butadiene rubber, sodium carboxymethyl cellulose, and conductive agent carbon black (purchased from Imerys Graphite & Carbon, Switzerland, model Super P, abbreviated as SP) in a weight ratio of 94.7:2.5:1.8:1. 82 parts by weight of water was added to 100 parts by weight of the mixture and stirred and mixed to obtain a first active material layer slurry. The first negative electrode material was an artificial graphite material with a structural stability parameter $S_1$ of 3.7 and an average particle size Dv50 of 15.6 μm;

In S2, the second negative electrode material was mixed with binder styrene-butadiene rubber, sodium carboxymethyl cellulose, and conductive agent carbon black (purchased from Imerys Graphite & Carbon, Switzerland, model Super P, abbreviated as SP) in a weight ratio of 94.7:2.5:1.8:1. 82 parts by weight of water was added to 100 parts by weight of the mixture and stirred and mixed to obtain a second active material layer slurry. The second negative electrode material was an artificial graphite material with a structural stability parameter $S_2$ of 2.3 and an average particle size Dv50 of 16.7 μm;

In step S3, a dual-cavity coating die head (manufactured by Manz AG, model BG01A-400-30B) was used. The first active material layer slurry was fed into the upper cavity of the dual-cavity coating die head, the second active material layer slurry was fed into the lower cavity of the dual-cavity coating die head, and then the first active material layer slurry and the second active material layer slurry from the upper cavity and the lower cavity of the dual-cavity coating die head were uniformly coated according to parameters of a weight ratio of 1:1 and a coating weight of 105 g/m$^2$ on both side surfaces of a 8μm copper foil current collector. Drying and roll-pressing were then performed on the current collector, so that the compaction density of the negative electrode active material layer on the current collector was 1.65 g/m$^3$. The negative electrode sheet was finally obtained through die cutting and punching.

In this embodiment, the above negative electrode sheet is also used to prepare a secondary lithium ion battery, and the preparation method of the secondary lithium ion battery is as follows:

(1) Preparation of Positive Electrode Sheet:
A ternary positive electrode material ($LiNi_{0.8}Co_{0.1}Mn_{0.1}O_2$), conductive carbon black (Super P), and binder polyvinylidene fluoride (PVDF) were mixed according to a mass ratio of 97:1.5:1.5, solvent N-methylpyrrolidone (NMP) was added, and the mixture was thoroughly stirred and mixed to obtain a positive electrode slurry. Stirring was performed under the action of a vacuum mixer until the system became uniformly transparent, and the positive electrode slurry was obtained. The positive electrode slurry was evenly coated on a 16 μm aluminum foil current collector. The aluminum foil current collector was dried at room temperature, transferred to an oven to be dried at 80°C to 120°C for 6 hours, and then cold pressed and slit, and the positive electrode sheet was obtained.
(2) The preparation process of the negative electrode sheet is described in this embodiment.
(3) Preparation of Electrolyte:
In an argon atmosphere glove box with a water content of <10 ppm, ethylene carbonate (EC), ethyl methyl carbonate (EMC), and diethyl carbonate (DEC) were mixed according to a volume ratio of 1:1:1 to obtain an organic solvent. Next, the fully dried lithium salt $LiPF_6$ was dissolved in the abovementioned organic solvent, and the electrolyte with a concentration of 1 mol/L was prepared.
(4) Preparation of Separator:
A porous PE film with a thickness of 11μm was selected as the separator.
(5) Battery Assembly:

The above-prepared positive electrode sheet, the separator, and the negative electrode sheet were sequentially stacked in a way that the separator was placed between the positive and negative electrode sheets for isolation. It was then covered with aluminum plastic film, transferred to a vacuum oven at 120°C to dry, and sealed after injecting 3.0 g/Ah of electrolyte. After standing still, hot and cold pressing, formation, fixture, grading, and other processes, a soft-pack battery (i.e., a lithium-ion battery) with a capacity of 1 Ah was finally prepared.

The specific steps and conditions for forming the electrolyte are provided as follows. After being injected, the electrolyte was kept in a hot pressure environment of 0.1 MPa, charged at 0.02 C for 17 minutes at 45°C in a static state, and then charged to 0.3 Ah at 0.02 C after standing for 5 minutes. The air bag was then cut off and vacuum-sealed, the electrolyte was left at room temperature for 48 hours, and the formation of the electrolyte was then completed.

Example 2

The difference between this example and Example 1 lies in that: when preparing the negative electrode sheet, in step S1, the first negative electrode material with a structural stability parameter $S_1$ of 7.4 and an average particle size Dv50 of 13.7$\mu$m is used.

In the negative electrode sheet provided by this example, the structural stability parameter ratio $S_1/S_2$ of the materials of the first active material layer to the second active material layer in the negative electrode active material layer is 3.2, and $\dfrac{(\tau - \varepsilon)V_{OI}}{P}$ of the negative electrode active material layer is 30.4.

Example 3

The difference between this example and Example 1 lies in that: when preparing the negative electrode sheet, in step S1, the first negative electrode material with a structural stability parameter $S_1$ of 10.4 and an average particle size Dv50 of 12.2$\mu$m is used.

In the negative electrode sheet provided by this example, the structural stability parameter ratio $S_1/S_2$ of the materials of the first active material layer to the second active material layer in the negative electrode active material layer is 3.2, and $\dfrac{(\tau - \varepsilon)V_{OI}}{P}$ of the negative electrode active material layer is 26.7.

Example 4

The difference between this example and Example 1 lies in that: when preparing the negative electrode sheet, in step S1 and step S2, the first negative electrode material with a structural stability parameter $S_1$ of 8.3 and an average particle size Dv50 of 13.3$\mu$m and the second negative electrode material with a structural stability parameter $S_2$ of 1.2 and an average particle size Dv50 of 18.3$\mu$m are used. In step S3, after coating the negative electrode active material layer on the current collector, the compaction density of the negative electrode active material layer on the current collector is adjusted to 1.75 g/m$^3$ through roll pressing.

In the negative electrode sheet provided by this example, the structural stability parameter ratio $S_1/S_2$ of the materials of the first active material layer to the second active material layer in the negative electrode active material layer is 6.9, and $\dfrac{(\tau - \varepsilon)V_{OI}}{P}$ of the negative electrode active material layer is 49.0.

Example 5

The difference between this example and Example 1 lies in that: when preparing the negative electrode sheet, in step S1 and step S2, the first negative electrode material with a structural stability parameter $S_1$ of 8.0 and an average particle size Dv50 of 16.2$\mu$m and the second negative electrode material with a structural stability parameter $S_2$ of 100 and an average particle size Dv50 of 18.0$\mu$m are used. In step S3, after coating the negative electrode active material layer on the current collector, the compaction density of the negative electrode active material layer on the current collector is adjusted to 1.75 g/m$^3$ through roll pressing.

In the negative electrode sheet provided by this example, the structural stability parameter ratio $S_1/S_2$ of the materials of the first active material layer to the second active material layer in the negative electrode active material layer is

6.9, and $\dfrac{(\tau - \varepsilon)V_{OI}}{P}$ of the negative electrode active material layer is 71.2.

Example 6

The difference between this example and Example 1 lies in that: when preparing the negative electrode sheet, in step S1 and step S2, the first negative electrode material with a structural stability parameter $S_1$ of 15.6 and an average particle size Dv50 of 11.2μm and the second negative electrode material with a structural stability parameter $S_2$ of 1.2 and an average particle size Dv50 of 18.3μm are used. In step S3, after coating the negative electrode active material layer on the current collector, the compaction density of the negative electrode active material layer on the current collector is adjusted to 1.75 g/m³ through roll pressing.

In the negative electrode sheet provided by this example, the structural stability parameter ratio $S_1/S_2$ of the materials of the first active material layer to the second active material layer in the negative electrode active material layer is

13.0, and $\dfrac{(\tau - \varepsilon)V_{OI}}{P}$ of the negative electrode active material layer is 64.7.

Example 7

The difference between this example and Example 6 lies in that: when preparing the negative electrode sheet, in step S1, the first negative electrode material with a structural stability parameter $S_1$ of 13.4 and an average particle size Dv50 of 12.6μm is used.

In the negative electrode sheet provided by this example, the structural stability parameter ratio $S_1/S_2$ of the materials of the first active material layer to the second active material layer in the negative electrode active material layer is

11.2, and $\dfrac{(\tau - \varepsilon)V_{OI}}{P}$ of the negative electrode active material layer is 56.8.

Example 8

The difference between this example and Example 1 lies in that: when preparing the negative electrode sheet, in step S1 and step S2, the first negative electrode material with a structural stability parameter $S_1$ of 9.7 and an average particle size Dv50 of 13.1μm and the second negative electrode material with a structural stability parameter $S_2$ of 2.3 and an average particle size Dv50 of 16.7μm are used. In step S3, after coating the negative electrode active material layer on the current collector, the compaction density of the negative electrode active material layer on the current collector is adjusted to 1.75 g/m³ through roll pressing.

In the negative electrode sheet provided by this example, the structural stability parameter ratio $S_1/S_2$ of the materials of the first active material layer to the second active material layer in the negative electrode active material layer is

4.2, and $\dfrac{(\tau - \varepsilon)V_{OI}}{P}$ of the negative electrode active material layer is 86.3.

Example 9

The difference between this example and Example 1 lies in that: when preparing the negative electrode sheet, in step S1 and step S2, the first negative electrode material with a structural stability parameter $S_1$ of 1.51 and an average particle size Dv50 of 13.7μm and the second negative electrode material with a structural stability parameter $S_2$ of 1.2 and an average particle size Dv50 of 18.3μm are used. In step S3, after coating the negative electrode active material layer on the current collector, the compaction density of the negative electrode active material layer on the current collector is adjusted to 1.75 g/m³ through roll pressing.

In the negative electrode sheet provided by this example, the structural stability parameter ratio $S_1/S_2$ of the materials of the first active material layer to the second active material layer in the negative electrode active material layer is

12.6, and $\dfrac{(\tau - \varepsilon)V_{OI}}{P}$ of the negative electrode active material layer is 91.2.

Material parameter tests are performed on the negative electrode sheets prepared in Examples 1 to 9, and fast charging time tests, cycle capacity retention rate tests, and storage performance tests are performed on the secondary lithium ion batteries assembled with the negative electrode sheets prepared in Examples 1 to 10.

(1) Test of structural stability parameter S of negative electrode material:
(2) Referring to national standard GB/T24533-2019, the powder sample was pressed into a sheet. Before testing, it should be held under standard pressure of 2 T for 20S, and formal operation began after a pressure relief interval of 10min. The powder pressure at 5 T was measured as P0, the powder was then tested under pressures of 2.5 T, 3 T, 3.5 T.....2+0.5n T......., and the compaction densities were recorded as P1, P2, P3......Pn....... When Pn/Pn-1≥1.05, this Pn was called the particle structure failure compaction density, and the structural stability parameter S=2+0.5n/5 was recorded.
(2) Test of porosity $\varepsilon$ of negative electrode sheet:
Referring to the test method of national standard GB21650.1-2008, a small amount of negative electrode sheet was selected for testing.
(3) Test of tortuosity $\tau$ of negative electrode sheet:
Testing was performed according to the image method used in the literature Ebner M, Wood V. Tool for Tortuosity Estimation in Lithium Ion Battery Porous Electrodes[J]. Journal of the Electrochemical Society, 2014, 162(2):A3064-A3070.
(4) Test of orientation degree $V_{OI}$ of negative electrode sheet:
Referring to national standard GB/T23442-2009, a small amount of negative electrode sheet was selected for testing, and the intensity ratio of I004/I110 peaks in the XRD diffraction of the negative electrode sheet is treated as the orientation degree VOI.
(5) Test of fast charging time:
The cell was directly charged with 0.33C current to 8% SOC state, and then according to the actual three-electrode window test of the cell, the charging windows of 10%, 20%, 30%, 40%, 50%, 60%, 70%, and 80% were C1, C2, C3, C4, C5, C6, C7, and C8 respectively. Step charge was used to charge to 80%, i.e., 8% to 10% used C1, 10% to 20% used C2, and so on. The charging time from 8% to 80% SOC state was recorded as the fast charging capability measurement standard. Herein, the calculation formula is

$$T=(0.02/C1+0.1/C2+0.1/C3+0.1/C4+0.1/C5+0.1/C6+0.1/C7+0.1/C8)\times60.$$

(6) Test of cycle capacity retention rate:
Under 25°C conditions, the cell was subjected to charge-discharge cycles with a charge-discharge system of 0.21A/g (calculated based on the mass of positive electrode material) and 2.8-4.25V. The number of cycles when the capacity dropped to 80% of the initial capacity was recorded as the material cycle capability evaluation number.
(7) Test of storage performance
At 25°C, the cell was subjected to capacity determination with 0.33C current and recorded as C0. The cell was then stored under high temperature conditions of 60°C for storage. After that, the cell was taken out every 7 days to test the capacity at room temperature, recorded as C1, C2.......Cn. The number of days when Cn deteriorated to 80% of C0 was recorded as the measurement standard for storage capability.

For the preparation parameters of the negative electrode sheets in Examples 1 to 9, please refer to Table 1 and Table 2, and for the performance test results of the negative electrode sheets in secondary lithium batteries, please refer to Table 3.

Table 1: Parameters of negative electrode materials selected for preparing negative electrode sheets in Examples 1 to 9

| Sample | First negative electrode material | | | Second negative electrode material | | | $S_1/S_2$ |
|---|---|---|---|---|---|---|---|
| | $S_1$ | $S_1$-Dv50 ($\mu$m) | $S_1$-capacity per gram (mAh/g) | $S_2$ | $S_2$-Dv50 ($\mu$m) | $S_2$-capacity per gram (mAh/g) | |
| Example 1 | 18.4 | 15.6 | 356.2 | 11.5 | 16.7 | 358.0 | 18.4 |
| Example 2 | 36.8 | 13.7 | 354.3 | 11.5 | 16.7 | 358.0 | 36.8 |
| Example 3 | 51.8 | 12.2 | 352.7 | 11.5 | 16.7 | 358.0 | 51.8 |
| Example 4 | 41.5 | 13.3 | 353.9 | 6.0 | 18.3 | 361.2 | 41.5 |
| Example 5 | 8.0 | 16.2 | 357.2 | 100 | 18.0 | 362.3 | 8.0 |
| Example 6 | 78.0 | 11.2 | 353.8 | 6.0 | 18.3 | 361.2 | 78.0 |

(continued)

| Sample | First negative electrode material | | | Second negative electrode material | | | $S_1/S_2$ |
|---|---|---|---|---|---|---|---|
| | $S_1$ | $S_1$-Dv50 ($\mu$m) | $S_1$-capacity per gram (mAh/g) | $S_2$ | $S_2$-Dv50 ($\mu$m) | $S_2$-capacity per gram (mAh/g) | |
| Example 7 | 67.2 | 12.6 | 354.6 | 6.0 | 18.3 | 361.2 | 67.2 |
| Example 8 | 48.5 | 13.1 | 354.5 | 11.5 | 16.7 | 358.0 | 48.5 |
| Example 9 | 75.6 | 13.7 | 355.2 | 6.0 | 18.3 | 361.2 | 75.6 |

Table 2: Material parameters of negative electrode sheets prepared in Examples 1 to 9

| Sample | $S_1$-Dv50 ($\mu$m) | $S_2$-Dv50 ($\mu$m) | $S_1/S_2$ | Tortuosity $\tau$ | Porosity $\varepsilon$ (%) | Orientation degree $V_{OI}$ | Compaction density $P$ (g/m$^3$) | $\dfrac{(\tau-\varepsilon)V_{OI}}{P}$ |
|---|---|---|---|---|---|---|---|---|
| Example 1 | 15.6 | 16.7 | 1.6 | 3.64 | 22.1 | 18.0 | 16.5 | 37.0 |
| Example 2 | 13.7 | 16.7 | 3.2 | 3.37 | 25.3 | 16.1 | 1.65 | 30.4 |
| Example 3 | 12.2 | 16.7 | 4.5 | 3.30 | 29.8 | 14.3 | 1.65 | 26.7 |
| Example 4 | 13.3 | 18.3 | 6.9 | 4.21 | 17.3 | 21.2 | 1.75 | 49.0 |
| Example 5 | 16.2 | 18.0 | 0.08 | 5.71 | 15.2 | 22.3 | 1.75 | 71.2 |
| Example 6 | 11.2 | 18.3 | 13.0 | 4.95 | 13.8 | 23.5 | 1.75 | 64.7 |
| Example 7 | 12.6 | 18.3 | 11.2 | 4.75 | 15.6 | 21.6 | 1.75 | 56.8 |
| Example 8 | 13.1 | 16.7 | 4.2 | 5.67 | 12.2 | 28.0 | 1.75 | 86.3 |
| Example 9 | 13.7 | 18.3 | 12.6 | 6.02 | 13.6 | 27.2 | 1.75 | 91.2 |

Table 3: Fast charging performance, cycle discharge performance, and storage performance of secondary lithium ion batteries assembled with negative electrode sheets prepared in Examples 1 to 9

| Sample | $S_1/S_2$ | $\dfrac{(\tau-\varepsilon)V_{OI}}{P}$ | Fast charging time /min(0-80%SOC) | Cycle performance /80% capacity cycle number | Storage performance /80% capacity retention days |
|---|---|---|---|---|---|
| Example 1 | 1.6 | 37.0 | 14.2 | 3000 | 260 |
| Example 2 | 3.2 | 30.4 | 13.1 | 3260 | 238 |
| Example 3 | 4.5 | 26.7 | 11.6 | 3350 | 216 |
| Example 4 | 6.9 | 49.0 | 15.6 | 2030 | 206 |
| Example 5 | 0.08 | 71.2 | 19.3 | 1736 | 180 |
| Example 6 | 13.0 | 64.7 | 17.9 | 1580 | 147 |
| Example 7 | 11.2 | 56.8 | 16.2 | 1658 | 165 |
| Example 8 | 4.2 | 86.3 | 18.2 | 1326 | 135 |
| Example 9 | 12.6 | 91.2 | 23.5 | 960 | 102 |

From the test results of Examples 1 to 9, it can be known that by adjusting the structural parameters of the negative electrode active material layer in the negative electrode sheet, so that in the negative electrode active material layer, the structural stability parameter ratio $S_1/S_2$ of the first active material layer to the second active material layer materials is 0.01-10.0 and satisfies $6.5 \leq \dfrac{(\tau - \varepsilon)V_{OI}}{P} \leq 80$, when this condition is met, the fast charging performance, cycle performance, and storage performance of the secondary lithium ion battery may all be improved.

From the test results of Examples 1 to 3, it can be known that when in the negative electrode active material layer, the structural stability parameter ratio $S_1/S_2$ of the first active material layer to the second active material layer materials is 0.1-5.0 and satisfies $20 \leq \dfrac{(\tau - \varepsilon)V_{OI}}{P} \leq 60$, the secondary lithium ion battery provides good fast charging performance, cycle performance, and storage performance at the same time. The fast charging time for the secondary lithium ion battery to charge to 80% SOC may be reduced to less than 15 minutes, the cycle number for maintaining 80% capacity is above 3000 cycles, and the days for maintaining 80% storage capacity is more than 210 days.

From the test results of Examples 1 to 3, it can be known that when in the negative electrode active material layer, the structural stability parameter ratio $S_1/S_2$ of the materials of the first active material layer to the second active material layer is less than 0.1 or greater than 5.0, the effect of improving the fast charging performance, cycle performance, and storage performance of the secondary lithium ion battery by adjusting the $\dfrac{(\tau - \varepsilon)V_{OI}}{P}$ value of the negative electrode sheet through compaction and electrode design is not obvious. As shown in the test results, the fast charging time for the secondary lithium ion battery to charge to 80% SOC increases to more than 15 minutes, the cycle number for maintaining 80% capacity decreases to 1700 to 2100 cycles, and the days for maintaining 80% storage capacity also decrease to less than 210 days.

Comparing the test results of Examples 1 to 5 and Examples 6 to 7, it can be seen that when in the negative electrode active material layer, the structural stability parameter ratio $S_1/S_2$ of the materials of the first active material layer and the second active material layer is greater than 10.0, the fast charging performance, cycle performance, and storage performance of the secondary lithium ion battery will all further decrease. As shown in the test results, with the increase of $S_1/S_2$ in the negative electrode sheet, the fast charging time for the secondary lithium ion battery to charge to 80% SOC further increases on the basis of 15 minutes, the cycle number for maintaining 80% capacity further decreases on the basis of 1700 cycles, and the days for maintaining 80% storage capacity also further decrease to less than 170 days.

Comparing the test results of Examples 1 to 4 and Example 8, regarding the negative electrode active material layer when this condition $\dfrac{(\tau - \varepsilon)V_{OI}}{P} \geq 80$ is met, even if the structural stability parameter ratio $S_1/S_2$ of the materials of the first active material layer to the second active material layer is within the range of 0.1-5.0, the fast charging performance, cycle performance, and storage performance of the secondary lithium ion battery also significantly decrease. As shown in the test results, the fast charging time for the secondary lithium ion battery to charge to 80% SOC increases to more than 18 minutes, the cycle number for maintaining 80% capacity decreases to less than 1400 cycles, and the days for maintaining 80% storage capacity decrease to less than 140 days.

Comparing the test results of Example 8 and Example 9, regarding the negative electrode active material layer when this condition $\dfrac{(\tau - \varepsilon)V_{OI}}{P} \geq 80$ is met and the structural stability parameter ratio $S_1/S_2$ of the materials of the first active material layer to the second active material layer is greater than 10.0, the fast charging performance, cycle performance, and storage performance of the secondary lithium ion battery may significantly drop. As shown in the test results, the fast charging time for the secondary lithium ion battery to charge to 80% SOC further increases to more than 20 minutes, the cycle number for maintaining 80% capacity further decreases to less than 1000 cycles, and the days for maintaining 80% storage capacity further decrease to less than 110 days.

In view of the foregoing, the invention provides a negative electrode sheet, and by adjusting the double-layer material selection and overall compaction density of the negative electrode active material layer of the negative electrode sheet, the negative electrode active material layer satisfies that the structural stability parameter ratio $S_1/S_2$ of the materials of the first active material layer to the second active material layer is 0.01-10.0 and $\dfrac{(\tau - \varepsilon)V_{OI}}{P}$ is 6.5-80.0, so that the structural stability and pore distribution rationality of the negative electrode sheet may thus be adjusted. By utilizing the negative electrode sheet to form a negative electrode active material layer with low tortuosity, high orientation, and rich porosity during compression, the fast charging and cycle and storage performance of the secondary lithium ion battery are further improved.

The above-mentioned embodiments only illustrate the principles and effects of the invention, but are not intended to limit the invention. A person having ordinary skill in the art can modify or change the abovementioned embodiments without departing from the spirit and scope of the invention. Therefore, all equivalent modifications or changes made by a person having ordinary skill in the art without departing from the spirit and technical ideas disclosed in the invention shall still be covered by the claims of the invention.

**Claims**

1. A negative electrode sheet, **characterized in** comprising:

   a current collector;
   a negative electrode active material layer located on at least one side of the current collector and comprising a first active material layer and a second active material layer stacked in a direction close to the current collector, wherein a structural stability parameter ratio $S_1/S_2$ of the first active material layer to the second active material layer satisfies 0.01-10.0.

2. The negative electrode sheet according to claim 1, **characterized in that** a negative electrode material in the negative electrode active material layer comprises a graphite material.

3. The negative electrode sheet according to claim 1, **characterized in that** the structural stability parameter ratio $S_1/S_2$ of the first active material layer to the second active material layer satisfies 0.1-5.0.

4. The negative electrode sheet according to claim 1, **characterized in that** a structural stability parameter $S_1$ of the first active material layer is 3-16.

5. The negative electrode sheet according to claim 1, **characterized in that** the negative electrode active material layer satisfies $6.5 \le \dfrac{(\tau - \varepsilon)V_{OI}}{P} \le 80$, wherein $\tau$ is a tortuosity of the negative electrode active material layer, $\varepsilon$ is a porosity of the negative electrode active material layer, P is a compaction density of the negative electrode active material layer, $V_{OI}$ is a stacking orientation degree of negative electrode material particles in the negative electrode active material layer.

6. The negative electrode sheet according to claim 5, **characterized in that** the negative electrode active material layer satisfies $20 \le \dfrac{(\tau - \varepsilon)V_{OI}}{P} \le 60$.

7. The negative electrode sheet according to claim 1, **characterized in that** a compaction density of the negative electrode active material layer is 1.65-1.75 g/cm$^3$.

8. A preparation method for the negative electrode sheet according to any one of claims 1 to 7, **characterized in** comprising:

   mixing a first negative electrode material with a binder, a conductive agent, and a thickening agent to form a slurry and obtaining a first active material layer slurry;
   mixing a second negative electrode material with a binder, a conductive agent, and a thickening agent to form a slurry and obtaining a second active material layer slurry; and
   coating the second active material layer slurry and the first active material layer slurry on at least one side of the current collector in sequence, and after coating, obtaining the negative electrode sheet through drying, compaction, die cutting, and punching,
   wherein a hardness of the first negative electrode material is greater than a hardness of the second negative electrode material.

9. The preparation method for the negative electrode sheet according to claim 8, **characterized in that** a structural stability parameter ratio $S_1/S_2$ of the first negative electrode material to the second negative electrode material satisfies 0.01-10.0.

10. The preparation method for the negative electrode sheet according to claim 8, **characterized in that** an average particle size Dv50 of the first negative electrode material is 11-17 $\mu$m, and an average particle size Dv50 of the second negative electrode material is 16-19 $\mu$m.

11. An electrochemical device, **characterized in** comprising a positive electrode sheet, a separator, an electrolyte, and the negative electrode sheet according to any one of claims 1 to 7.

200 — 210

220

100

# FIG. 1

| Mixing a first negative electrode material with a binder, a conductive agent, and a thickening agent to form a slurry and obtaining a first active material layer slurry; | S1 |

| Mixing a second negative electrode material with a binder, a conductive agent, and a thickening agent to form a slurry and obtaining a second active material layer slurry; | S2 |

| Coating the second active material layer slurry and the first active material layer slurry on at least one side of a current collector in sequence, and after coating, obtaining a negative electrode sheet through drying, compaction, die cutting, and punching. | S3 |

# FIG. 2

## INTERNATIONAL SEARCH REPORT

| International application No. |
|---|
| **PCT/CN2024/102478** |

| A. | CLASSIFICATION OF SUBJECT MATTER |
|---|---|

H01M4/36(2006.01)i; H01M4/133(2010.01)i; H01M4/1393(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC/CPC: H01M4, H01M10

Documentation searched other than minimum documentation to the extent that such documents are included in the fields searched

Electronic data base consulted during the international search (name of data base and, where practicable, search terms used)

CNTXT, ENTXTC, CNKI, ENTXT, WPI, ISI_Web of Science: 二次电池, 负极, 阳极, 参数, 结构稳定, 第二, 第一, 活性材料, 活性物质, GB, T24533, 迂曲度, 孔隙率, 压实密度, negative, electrode, lithium, porosity, secondary, battery, cell, compaction density

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115132968 A (BEIJING XIAOMI MOBILE SOFTWARE CO., LTD.) 30 September 2022 (2022-09-30) <br> description, paragraphs 5, 6, 20, and 21 | 1-11 |
| A | CN 113161515 A (NINGDE AMPEREX TECHNOLOGY LTD.) 23 July 2021 (2021-07-23) <br> entire description | 1-11 |
| A | CN 115602787 A (SVOLT ENERGY TECHNOLOGY CO., LTD.) 13 January 2023 (2023-01-13) <br> entire description | 1-11 |
| A | CN 115917780 A (NINGDE CONTEMPORARY AMPEREX TECHNOLOGY CO., LTD.) 04 April 2023 (2023-04-04) <br> entire description | 1-11 |
| A | CN 116154103 A (ZHONGCHUANG XINHANG TECHNOLOGY GROUP CO., LTD.) 23 May 2023 (2023-05-23) <br> entire description | 1-11 |

| ✓ Further documents are listed in the continuation of Box C. | ✓ See patent family annex. |
|---|---|

|  |  |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 September 2024** | **12 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** |  |
|  | Telephone No. |

Form PCT/ISA/210 (second sheet) (July 2022)

**INTERNATIONAL SEARCH REPORT**

| International application No. |
| --- |
| **PCT/CN2024/102478** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022367872 A1 (CONTEMPORARY AMPEREX TECHNOLOGY CO., LTD.) 17 November 2022 (2022-11-17) entire description | 1-11 |
| A | EP 1018775 A1 (ASAHI CHEMICAL INDUSTRY CO., LTD.) 12 July 2000 (2000-07-12) entire description | 1-11 |

Form PCT/ISA/210 (second sheet) (July 2022)

## INTERNATIONAL SEARCH REPORT
### Information on patent family members

International application No.

**PCT/CN2024/102478**

| Patent document cited in search report | | | Publication date (day/month/year) | Patent family member(s) | | | Publication date (day/month/year) |
|---|---|---|---|---|---|---|---|
| CN | 115132968 | A | 30 September 2022 | None | | | |
| CN | 113161515 | A | 23 July 2021 | CN | 113161515 | B | 28 February 2023 |
| CN | 115602787 | A | 13 January 2023 | None | | | |
| CN | 115917780 | A | 04 April 2023 | None | | | |
| CN | 116154103 | A | 23 May 2023 | None | | | |
| US | 2022367872 | A1 | 17 November 2022 | EP | 4075542 | A1 | 19 October 2022 |
| | | | | EP | 4075542 | A4 | 01 November 2023 |
| | | | | WO | 2022140902 | A1 | 07 July 2022 |
| | | | | JP | 2023503706 | A | 31 January 2023 |
| | | | | JP | 7406638 | B2 | 27 December 2023 |
| | | | | KR | 20220110862 | A | 09 August 2022 |
| | | | | KR | 102543843 | B1 | 14 June 2023 |
| | | | | US | 11646417 | B2 | 09 May 2023 |
| EP | 1018775 | A1 | 12 July 2000 | EP | 1018775 | A4 | 24 November 2004 |
| | | | | EP | 1018775 | B1 | 03 January 2007 |
| | | | | WO | 9838688 | A1 | 03 September 1998 |
| | | | | KR | 20000075765 | A | 26 December 2000 |
| | | | | KR | 100344686 | B1 | 25 July 2002 |
| | | | | CA | 2282385 | A1 | 03 September 1998 |
| | | | | CA | 2282385 | C | 28 October 2003 |
| | | | | JP | 3613400 | B2 | 26 January 2005 |
| | | | | US | 6387564 | B1 | 14 May 2002 |
| | | | | DE | 69836820 | D1 | 15 February 2007 |
| | | | | DE | 69836820 | T2 | 11 October 2007 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **EBNER M** ; **WOOD V.** Tool for Tortuosity Estimation in Lithium Ion Battery Porous Electrodes[J. *Journal of the Electrochemical Society*, 2014, vol. 162 (2), A3064-A3070